**Europäisches Patentamt**

**European Patent Office**

**Office européen des brevets**

(11) Veröffentlichungsnummer: **0 044 375**
**A1**

# (12) EUROPÄISCHE PATENTANMELDUNG

(21) Anmeldenummer: **81102614.5**

(22) Anmeldetag: **07.04.81**

(51) Int. Cl.³: **C 04 B 1/02**
**C 01 F 11/02**

(30) Priorität: **18.07.80 DE 3027327**

(43) Veröffentlichungstag der Anmeldung:
**27.01.82 Patentblatt 82/4**

(84) Benannte Vertragsstaaten:
**AT BE CH DE FR GB IT LI NL SE**

(71) Anmelder: **Süddeutsche Zucker-Aktiengesellschaft**
**Maximilianstrasse 10**
**D-6800 Mannheim 1(DE)**

(72) Erfinder: **Henatsch, Johannes, Dipl.-Ing.**
**Donauwörther Strasse 70**
**D-8852 Rain am Lech(DE)**

(74) Vertreter: **Körber, Wolfhart, Dr. et al,**
**Patentanwälte Dipl.Ing.H.Mitscherlich,**
**Dipl.Ing.K.Gunschmann, Dr.rer.nat.W.Körber,**
**Dipl.Ing.J.Schmidt-Evers Steinsdorfstrasse 10**
**D-8000 München 22(DE)**

(54) Rekalzinierung von getrocknetem Kalkschlamm im Wärme-Verbund mit einer Dampferzeugung.

(57) Es wird ein Verfahren zum Kalzinieren von calciumcarbonathaltigen Schlämmen, bei dem anfallender Schlamm zunächst getrocknet und anschließend kalziniert wird beschrieben. Die Erfindung bezweckt, daß der Einsatz von Primärenergie bedeutend verringert wird und eine Anlage zur Durchführung des Verfahrens verfahrenstechnisch hinsichtlich des Gas- als auch des Feststoffstromes stabiler betrieben werden kann, auch dann, wenn ungleicher Massenfluß gegeben ist.

Dazu werden folgende Verfahrensschritte vorgeschlagen:

- mechanische Abpressung des Schlammes auf Trockensubstanzgehalte >70%,
- thermische Trocknung des mechanisch entwässerten Carbonatationsschlammes auf 97 bis 99,5% Trockensubstanzgehalt, wobei für diesen Trocknungsprozeß verfahrensfremde Wärmeträger mit einem niedrigeren Energiegehalt verwendet werden,
- Kalzinieren des getrockneten calciumcarbonathaltigen Schlammes mit Heißgas von 870 bis 970°C in einem Kalzinator mit anschleißender Kühlung der Reaktionsabgase in zwei Stufen,

- a) in einem Wärmeaustauscher, Rekuperator, von 880 bis 950°C auf 600 bis 750°C im Gegenstrom mit Frischluft, wobei diese auf 300 bis 450°C erwärmt wird,
  b) in einem Dampferzeuger auf 150 bis 200°C.

./...

Croydon Printing Company Ltd.

0044375

Rekalzinierung von getrocknetem Kalkschlamm
im Wärme-Verbund mit einer Dampferzeugung

Die Erfindung betrifft ein Verfahren zum Rückbrennen von calciumcarbonathaltigen Abfallschlämmen, zum Beispiel der Zuckerindustrie, zu Calciumoxid unter optimalen verfahrenstechnischen und wärmewirtschaftlichen Gesichtspunkten.

Bei der Zuckerherstellung aus Zuckerrüben und Zuckerrohr wird die Saftreinigung fast ausschließlich nach Varianten des Kalk-Kohlensäure-Saftreinigungssystems durchgeführt. Dabei fallen Carbonatationsschlämme mit einem Trockensubstanzgehalt von normalerweise 4o bis 45 % in einer Menge von 8 bis 1o Gew.-% auf Zuckerrüben bzw. 4 bis 5 Gew.-% auf Zuckerrohr an, die einen Gehalt von 7o bis 8o % Calciumcarbonat in der Trockensubstanz haben.

Soweit dieser Carbonatationskalk nicht als Düngemittel an die Landwirtschaft zurückgegeben werden kann (siehe hierzu Jllmanns Encyklopädie der technischen Chemie, 3. Auflage, Band 19, Seiten 24o/241), müssen diese Schlämme deponiert werden.

Auch in anderen Industriezweigen fällt Calciumcarbonat in mehr oder weniger verunreinigter Form an (siehe hierzu Ullmanns Encyklopädie der technischen Chemie, 3. Auflage, Band 4, Seite 838), der nur in beschränktem Maße als Düngekalk in der näheren Umgebung Bedeutung besitzt. Wie in der Zuckerindustrie, muß der Überschuß an solchen Schlämmen in Deponien abgelagert werden.

Die Verknappung von geeignetem Deponiegelände in der Nähe der Fabriken sowie Bestrebungen, möglichst alle Grundwasserbeeinflussungen durch Deponien zu vermeiden, läßt das Problem des Rückbrennens der anfallenden calciumcarbonathaltigen Schlämme immer dringender werden.

Der technische Stand beim Rückbrennen von Carbonatationsschlämmen in der Zuckerindustrie ist zusammenfassend in den aufgezählten Publikationen dargestellt:

Ullmanns Encyklopädie der technischen Chemie, 3. Auflage, Band 19, Seite 240,

Kroneberger, G. F.
Lime Recalcination in the U. S. Sugar Industry, Sugar Technol. Rev. 4 (1976/77) 3 - 47,

Schiweck, H. u.a.
Das Rückbrennen von Carbonatationsschlamm Erfahrungen und Ergebnisse mit einer Versuchsanlage im Werk Rain der Süddeutschen Zucker- Aktiengesellschaft
ZUCKERINDUSTRIE 104 (1979), 813 - 824.

Gemeinsam allen dort beschriebenen Verfahren ist, daß sie entweder von luftgetrockneten Schlämmen ausgehen oder den bei der Zuckerfabrik anfallenden Carbonatationsschlamm mit 40 bis 45 % Trockensubstanzgehalt zuerst einmal mit Heißgas aus der Rekalzinierung mit Temperaturen $\geq 500^{\circ}C$ trocknen, wobei ein Großteil der für den Gesamtprozeß benötigten Energie für die Wasserverdampfung beim Trocknungsprozeß aufgewendet werden muß und wobei die Trocknung mit "hochwertiger" Energie, also einem Medium mit hohem Energiegehalt, durchgeführt wird.

Daher ist der Aufwand an Primärenergie zur Durchführung dieser Prozesse relativ hoch, 4,5 bis 2o $\cdot$ 1o$^6$ kJ/t CaO, und der Verbundbetrieb Trocknung - Rekalzinieren arbeitet nur bei einem bestimmten Wassergehalt im zu trocknenden Schlamm wärmetechnisch im Optimum. Bei allen anderen Wassergehalten im Carbonatationsschlamm treten Wärmeverluste auf. Auch bringt der starre Verbund Trocknung - Rekalzinierung einige technologische Probleme bei ungleichem Massenfluß, das gilt sowohl für den Gas- als auch für den Feststoffstrom.

Der Erfindung liegt die Aufgabe zugrunde, ein Verfahren zum Kalzinieren von calciumcarbonathaltigen Schlämmen, bei dem anfallender Schlamm zunächst getrocknet und anschließend kalziniert wird, dahingehend zu verbessern, daß der Einsatz von Primärenergie bedeutend verringert wird und eine Anlage zur Durchführung des Verfahrens verfahrenstechnisch hinsichtlich des Gas- als auch des Feststoffstromes stabiler betrieben werden kann, auch dann, wenn ungleicher Massenfluß gegeben ist.

Zur Lösung dieser Aufgabe wird ein Verfahren mit folgenden unabhängigen Verfahrensschritten vorgeschlagen:

- mechanische Abpressung des Schlammes auf Trockensubstanzgehalte $\geq 7o$ %,

- thermische Trocknung des mechanisch entwässerten Carbonatationsschlammes auf 97 bis 99,5 % Trockensubstanzgehalt, wobei für diesen Trocknungsprozeß verfahrensfremde Wärmeträger mit einem niedrigeren Energiegehalt verwendet werden,

- Kalzinieren des getrockneten calciumcarbonathaltigen Schlammes mit Heißgas von 870 bis 970$^{\circ}$C in einem Kalzinator mit anschließender Kühlung der Reaktionsabgase in zwei Stufen,

   a) in einem Wärmeaustauscher, Rekuperator, von 880 bis 950$^{\circ}$C auf 600 bis 750$^{\circ}$C im Gegenstrom mit Frischluft, wobei diese auf 300 bis 450$^{\circ}$C erwärmt wird,

   b) in einem Dampferzeuger auf 150 bis 200$^{\circ}$C.

Der Erfindung liegt die Erkenntnis zugrunde, daß sich nicht nur die eingangs geschilderten verfahrenstechnischen und wärmewirtschaftlichen Nachteile beseitigen lassen, sondern der Einsatz von Primärenergie bedeutend verringern läßt und die gesamte Anlage verfahrenstechnisch stabiler zu betreiben ist, wenn man den starren Verbundtrocknung - Rekalzinierung entkoppelt, das heißt, insbesondere die Trocknung nicht mit direkt oder indirekt aus dem Kalzinator zurückgewonnenen Heißgasen durchführt, und den Prozeß in mehrere voneinander unabhängige Verfahrensschritte aufteilt.

Zweckmäßige Ausgestaltungen des Verfahrens sind in den Unteransprüchen gekennzeichnet. Von besonderer Bedeutung ist die Verwendung des erfindungsgemäßen Verfahrens in der Zuckerherstellung, wobei der calciumhaltige Schlamm der anfallende Carbonatationsschlamm ist. Die verfahrensfremden Wärmeträger für die Trocknung können dann Verdampfungskondensate mit einer Temperatur $\leq 100^{o}C$, Kochbrüden der Kochstation mit Temperaturen um $65^{o}C$ oder Abgas von Schnitzeltrocknungstrommeln mit Temperaturen um $120^{o}C$ sein.

Die aus dem Dampferzeuger abströmenden $CO_2$-haltigen Reaktionsabgase werden im Falle der Verwendung des erfindungsgemäßen Verfahrens im Rahmen der Zuckerherstellung als Reaktionsgas den Carbonatationen zugeführt.

Die im Rekuperator auf 3oo bis $450^{o}C$ angewärmte Frischluft kann sowohl als Verbrennungsluft für einen Heißgaserzeuger oder direkt dem Kalzinator als Verbrennungs- und Träger(Transport)-luft dienen.

Zusätzliche Prozeßenergie wird in Form von Heizöl, Koks oder Kohlenstaub zum Heißgaserzeuger oder dem Kalzinator direkt zugeführt. Die auf der Heißgasseite des Rekuperators nicht entnommene überschüssige Wärmemenge wird in einem Dampferzeuger genutzt, wobei der erzeugte Dampf außerhalb der Rekalzinierungsanlage als Prozeßdampf oder für Heizungszwecke verwendet wird. Die im Dampferzeuger genutzte Wärmemenge geht bei dem normalen Trocknungs-Rekalzinierungs-Verbund größtenteils verloren.

Da bei dem erfindungsgemäßen Verfahren dieser Verlust nicht auftritt, kann die Rekalzinierung mit ausreichend großen Heißgasmengen betrieben und die Heißgasmenge muß bei Verringerung der zu kalzinierenden Schlammenge nicht unmittelbar herabgesetzt werden, was eine stabile Reaktionsführung des Kalzinierungsprozesses erlaubt.

Da der theoretische Energiebedarf für das Kalzinieren von Calciumcarbonat von $3,35 \cdot 10^6$ kJ/t CaO im Falle des Kalzinierens von Carbonatationsschlamm einer Zuckerfabrik praktisch durch den Brennwert der im Schlamm enthaltenen organischen Substanzen gedeckt wird, kann die in Form von Primärenergie zugeführte Prozeßwärme auf ca. $1 \cdot 10^6$ kJ/t CaO gehalten werden, was eine Verringerung der Prozeßenergie auf weniger als 25 % des bisher erreichten besten Wertes von $4,52 \cdot 10^6$ kJ/t CaO bedeutet.

Die für die Trocknung des mechanisch entwässerten Carbonatationsschlammes von 7o bis 80 % Trockensubstanzgehalt auf 98 bis 99 % Trockensubstanzgehalt aufzuwendende Wärmemenge beträgt ca. $1 \cdot 10^6$ kJ/t CaO. Diese Trocknung wird, wie bereits ausgeführt, unter Verwendung von Verdampfungskondensat, Kochbrüden oder Abgas einer Zuckerfabrik zum Beispiel in einem Fließ-, Wirbelbett, Turbinentrockner usw. durchgeführt.

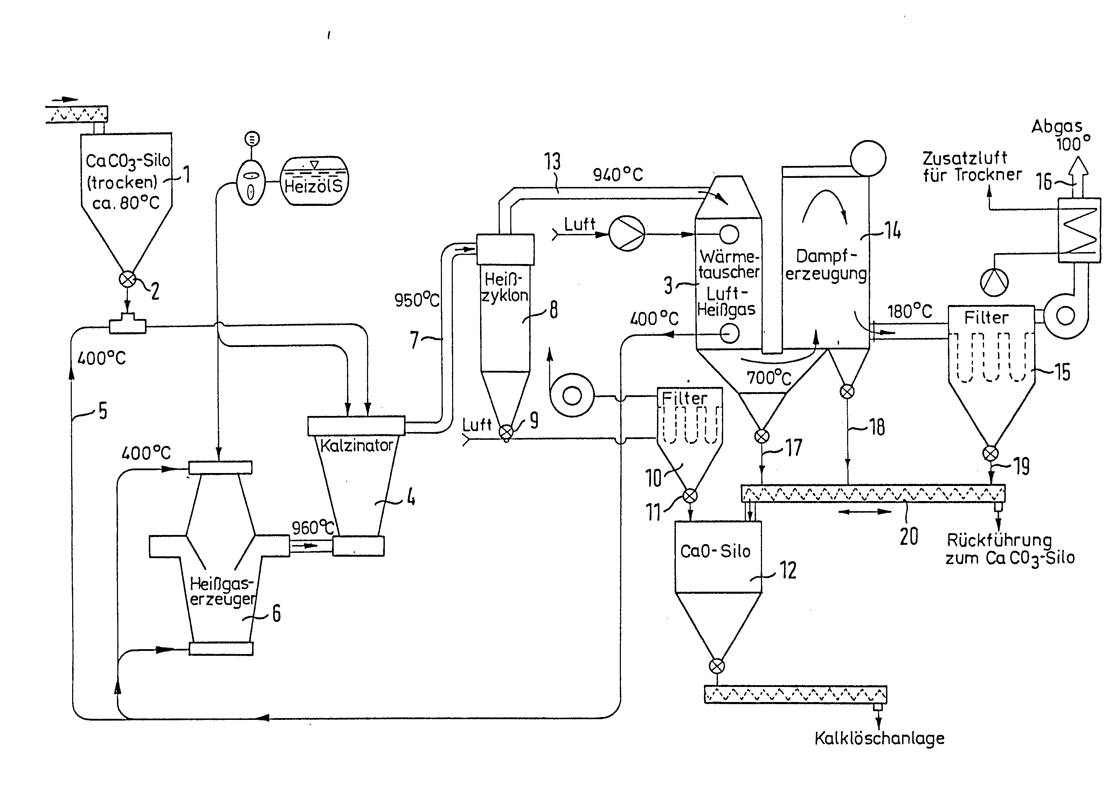

In der beigefügten einzigen Figur ist in einem Fließbild beispielhaft ein Verfahren zum Rekalzinieren von calciumcarbonathaltigem Schlamm (Carbonatationsschlamm) einer Zuckerfabrik schematisch dargestellt. Dabei sind die beiden ersten Verfahrensschritte, die mechanische Abpressung und die thermische Trocknung des Schlammes nicht dargestellt.

Getrockneter Carbonatationsschlamm aus einem Vorratssilo 1 wird über eine Zellenradschleuse 2 mit einem Heißgasstrom 5 von 4oo°C - im Rekuperator 3 erwärmte Frischluft - in den Kalzinator 4 transportiert; dort wird der Carbonatationsschlamm mit Heizgasen von 96o°C - erzeugt im Heißgaserzeuger 6 aus im Rekuperator 3 auf 4oo°C vorgewärmter Luft - vermischt und rekalziniert. Aus dem aus dem Kalzinator 4 ausströmenden Feststoff-Gas-Gemisch (Leitung 7) wird im Heißzyklon 8 das Calciumoxid zu 9o bis 95 % abgeschieden und aus dem Heißgaszyklon 8 über eine Zellenradschleuse 9 ausgetragen. Mit Luft wird das ausgetragene Calciumoxid zu einem Schlauchfilter 1o transportiert und dort aus dem Luftstrom abgeschieden. Das auf diese Weise abgekühlte Calciumoxid fällt über eine Zellenradschleuse 11 in das Calciumoxidsilo 12. Der Heißgasstrom (Leitung 13) aus dem Zyklon 8 wird über einen Wärmeaustauscher (Rekuperator) 3 geführt und dort im Gegenstrom zu Frischluft, zum Beispiel Abluft aus dem Filter 1o für die Abscheidung des Calcium-oxides, auf 7oo$^o$C abgekühlt. Die Frischluft wird im Gegen-strom dafür auf 4oo$^o$C erwärmt und dient sowohl als Verbrennungsluft für den Heißgaserzeuger 6 als auch als Transportluft (= Heißgasstrom 5) für den getrockneten calciumcarbonathaltigen Schlamm. Der Heißgasstrom aus dem Rekuperator 3 von 7oo$^o$C wird nun in einen Dampferzeuger 14 geleitet und dort auf 18o$^o$C abgekühlt. Nach Entstaubung in einem Filter 15 wird das $CO_2$-haltige Abgas (bei 16) in die Carbonationen geleitet. Die im Wärmeaustauscher 3 (bei 17) und im Dampferzeuger 14 (bei 18) abgeschiedenen Staubanteile und der im Filter 15 (bei 19) abgeschiedene Staub werden mittels einer Transporteinrichtung 2o entweder in das Calciumoxidsilo 12 transportiert - im Falle, daß der Staubanteil über 85 % rekalziniert ist - oder - wenn der Rekalzinierungsgrad unter 85 % liegt - in das Silo 1 für calciumcarbonathaltigen Schlamm zurücktransportiert.

## ANSPRÜCHE

1. Verfahren zum Rekalzinieren von calciumcarbonathaltigen Schlämmen, bei dem anfallender Schlamm zunächst
getrocknet und anschließend kalziniert wird, gekennzeichnet
durch folgende unabhängige Verfahrensschritte:

- mechanische Abpressung des Schlammes auf Trockensubstanzgehalte $> 7o$ %,

- thermische Trocknung des mechanisch entwässerten
  Carbonatationsschlammes auf 97 bis 99,5 % Trockensubstanzgehalt, wobei für diesen Trocknungsprozeß
  verfahrensfremde Wärmeträger mit einem niedrigeren
  Energiegehalt verwendet werden,

- Kalzinieren des getrockneten calciumcarbonathaltigen
  Schlammes mit Heißgas von 87o bis 97o$^{o}$C in einem
  Kalzinator mit anschließender Kühlung der Reaktionsabgase in zwei Stufen,

a) in einem Wärmeaustauscher, Rekuperator, von 880 bis 950$^o$C auf 600 bis 750$^o$C im Gegenstrom mit Frischluft, wobei diese auf 300 bis 450$^o$C erwärmt wird,

b) in einem Dampferzeuger auf 150 bis 200$^o$C.

2. Verfahren nach Anspruch 1, dadurch gekennzeichnet, daß die auf 300 bis 400$^o$C erwärmte Frischluft als Verbrennungsluft für einen Heißgaserzeuger des Kalzinators verwendet wird.

3. Verfahren nach Anspruch 1, dadurch gekennzeichnet, daß die auf 300 bis 400$^o$C erwärmte Frischluft direkt dem Kalzinator als Verbrennungs- und/oder Träger(Transport-)luft für den getrockneten Schlamm zugeführt wird.

4. Verfahren nach Anspruch 1, dadurch gekennzeichnet, daß der in dem Dampferzeuger erzeugte Dampf verfahrensfremd als Prozeßdampf oder für Heizungszwecke verwendet wird.

5. Verfahren nach einem der vorhergehenden Ansprüche, dadurch gekennzeichnet, daß der Kalzinator beliebiger Bauart, zum Beispiel mit einer Hochgeschwindigkeitsreaktionskammer, einem Wirbel- oder Fließbett, ist.

6. Verwendung des Verfahrens nach einem der vorhergehenden Ansprüche in der Zuckerherstellung aus Rohr oder Rüben, wobei der calciumhaltige Schlamm der anfallende Carbonatationsschlamm ist und die verfahrensfremden Wärmeträger für die Trocknung Verdampfungskondensate mit einer Temperatur $> 100^{o}C$, Kochbrüden der Kochstation mit Temperaturen um $65^{o}C$ oder Abgas von Schnitzeltrocknungstrommeln mit Temperaturen um $120^{o}C$ sind.

7. Verwendung nach Anspruch 6, dadurch gekennzeichnet, daß die aus dem Dampferzeuger abströmenden $CO_2$-haltigen Reaktionsabgase des Kalzinators als Reaktionsgase den Carbonatationen zugeführt werden.

CaCO3-Silo (trocken) ca. 80°C — 1

HeizölS

13   940°C

Luft

Wärme-tauscher Luft-Heißgas — 3

Dampf-erzeugung — 14

Abgas 100°

Zusatzluft für Trockner — 16

950°C

Heiß-zyklon — 8

400°C

180°C   Filter — 15

7

400°C

5

400°C

Luft   9

Filter — 10

700°C

17

18

19

Kalzinator — 4

960°C

11

20

Heißgas-erzeuger — 6

CaO-Silo — 12

Rückführung zum CaCO3-Silo

Kalklöschanlage

1/1

0044375

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 653 325 (SÜDDEUTSCHE ZUCKER-AG et al.) <br> * Ansprüche * <br> -- | 1,7 |
| A | DE - A1 - 2 539 695 (SÜDDEUTSCHE ZUCKER-AG et al.) <br> * Ansprüche * <br> -- | 1 |
| A | DE - B2 - 2 257 539 (F. SCHOPPE) <br> * Fig. 1 * <br> ---- | 1-3, 5 |

**KLASSIFIKATION DER ANMELDUNG (Int. Cl.³)**

C 04 B 1/02
C 01 F 11/02

**RECHERCHIERTE SACHGEBIETE (Int. Cl.³)**

C 01 F 11/00
C 02 F 11/00
C 04 B 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 18-08-1981 | HÖRNER |

EPA form 1503.1 06.78